Europäisches Patentamt

European Patent Office

Office européen des brevets

(19)

(11) Veröffentlichungsnummer: **0 344 339**
A1

(12) **EUROPÄISCHE PATENTANMELDUNG**

(21) Anmeldenummer: 88108642.5

(22) Anmeldetag: 31.05.88

(51) Int. Cl.⁴: **B23K 26/00 , B23K 26/04**

Geänderte Patentansprüche gemäss Regel 86 (2) EPÜ.

(43) Veröffentlichungstag der Anmeldung:
06.12.89 Patentblatt 89/49

(84) Benannte Vertragsstaaten:
AT BE CH DE ES FR GB GR IT LI LU NL SE

(71) Anmelder: **A.L.L. GmbH**
**Westendstrasse 123**
**D-8000 München 2(DE)**

(72) Erfinder: **Huber, Thomas**
**Fraunhoferstrasse 14**
**D-8000 München 5(DE)**

(54) **Verfahren zur Ermittlung des Durchstechzeitpunktes bei der Materialbearbeitung mit einem Laserstrahl.**

(57) Verfahren zur Ermittlung des Durchstechzeitpunktes bei der Materialbearbeitung mit einem Laserstrahl.

Bei diesem Verfahren wird die vom Werkstück (8) emittierte elektromagnetische Strahlung (2), oder die durch das Einstechloch (20) austretende Laserstrahlung (24), von einem oder von mehreren Detektoren (7) gemessen.

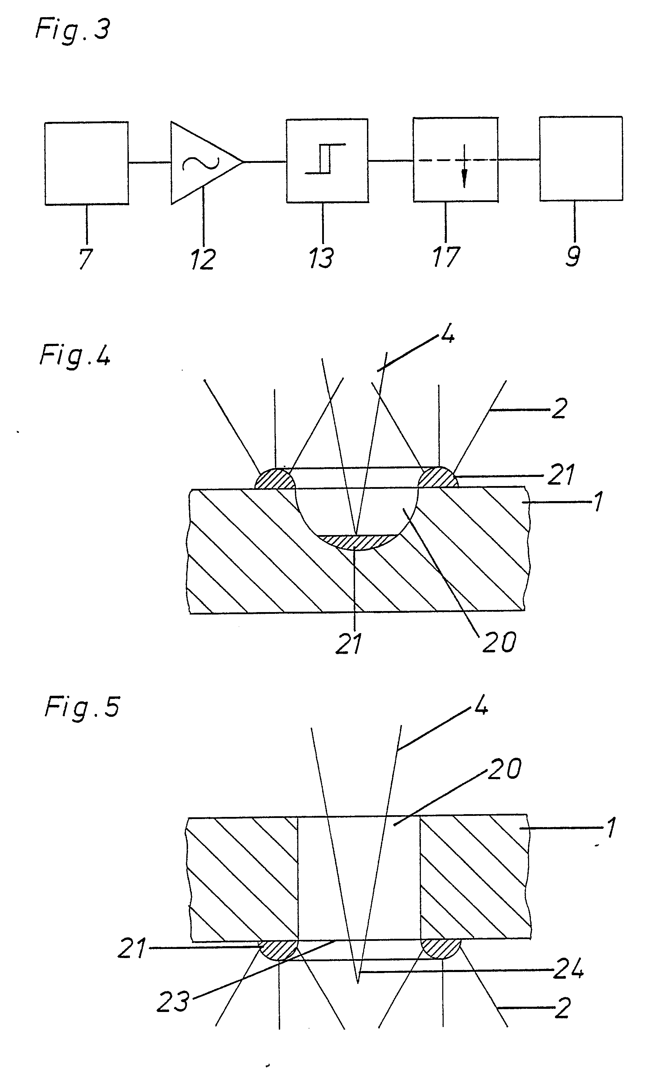

Dieses Signal dient, nachdem es durch eine in Fig. 3 dargestellte elektronische Schaltung (11) aufbereitet wurde, der über einen Prozeßrechner (9) gesteuerten Werkzeugmaschine zur Steuerung des Befehls zum Beginn der Vorschubbewegung (10).

Fig. 1

EP 0 344 339 A1

**Verfahren zur Ermittlung des Durchstechzeitpunktes bei der Materialbearbeitung mit einem Laserstrahl**

Die vorliegende Erfindung betrifft ein Verfahrung zur Ermittlung des Durchstechzeitpunktes bei der Materialbearbeitung mit einem Laserstrahl.

Nach dem heutigen Stand der Technik wird die Zeit, die der Laserstrahl zum Durchdringen eines Werkstücks benötigt, bei einem Probelauf von Hand gemessen oder nach Erfahrungswerten bestimmt. Diese Zeit wird zusammen mit einem Sicherheitszuschlag dem Prozeßrechner eingegeben, um nach deren Ablauf die Vorschubbewegung des Lasers bzw. des Werkstücks zu starten.

Der Sicherheitszuschlag richtet sich nach der Art des Werkstücks und der Laserparameter (Betriebsdauer, Justagezustand). Beim im Dauerstrich betriebenen Laser kann der Sicherheitszuschlag klein gewählt werden, da die Zeit für einen Durchstechvorgang relativ kurz ist (für ein 3 mm Blech ca. 0,3s). Der Nachteil dieses Verfahrens liegt in der hohen Energiedichte des fokussierten Laserstrahls auf der Werkstückoberfläche, was zu einem Ausbrennen des Einstechlochs und zu einer möglichen Beschädigung der Arbeitsoptik durch Aufspritzen des flüssigen Werkstückmaterials führt.

Diese Nachteile treten beim Einstechen mit einem gepulst betriebenen Laser nicht auf, jedoch tritt dabei der Effekt auf, daß die Pulsenergie des Lasers mit der Länge der Betriebsdauer zurück geht und somit die Zeit für einen Durchstechvorgang nicht konstant bleibt (für ein 3 mm Blech ca. 3s). Aus diesem Grund muß ein hoher Sicherheitszuschlag gewählt werden, der die Prozeßzeit deutlich heraufsetzt.

Bei beiden Betriebsarten des Lasers ist nicht sicher gewährleistet, daß beim Beginn der Vorschubbewegung der Durchstechvorgang abgeschlossen ist. Ein Beginn der Vorschubbewegung ohne Beendigung des Durchstechvorgangs, führt wiederum zu einer Beschädigung der Arbeitsoptik durch Aufspritzen des flüssigen Werkstoffmaterials.

Nach dem heutigen Stand der Technik ist kein Verfahren zur Messung des Durchstechzeitpunktes und Bestimmung des Beginns der Vorschubbewegung bekannt. Diese Aufgabe wird durch die im Patentanspruch 1 unter Schutz gestellte Erfindung gelöst.

Durch die Erfindung wird erreicht, daß die Prozeßzeit durch Wegfallen des Sicherheitszuschlags deutlich verkürzt wird und keine Beschädigung der Arbeitsoptik durch aufspritzendes Werkstückmaterial bei zu frühem Beginn der Vorschubbewegung auftreten kann.

Die durch die Erfindung erreichten Vorteile sind ebenso darin zu sehen, daß diese Aufgabe ohne Eingriff in die Arbeitsoptik des Lasers gelöst wird und kein Probelauf zur Ermittlung der Durchstechzeit gefahren werden muß.

Im folgenden wird ein Ausführungsbeispiel der Erfindung unter Bezugnahme auf die Zeichnung näher erläutert; es zeigen:

    Fig. 1 die Gesamtanordung des Lasers

    Fig. 2 die von den Detektoren aufgenommenen Signale für im Dauerstrich und gepulst betriebenen Laser

    Fig. 3 Schaltbild des Signalweges vom Detektor zum Prozeßrechner

    Fig. 4 Schnitt der Bearbeitungszone vor dem Durchstechen

    Fig. 5 Schnitt der Bearbeitungszone nach dem Durchstechen

Die Fig. 4 zeigt, daß während des Einstechens mit einem Laserstrahl (4) in ein Werkstück (8) sich am Grund und um das Einstechloch (20) flüssiges Werkstückmaterial (21) sammelt, von dem divergent elektromagnetische Strahlung (2) ausgeht.

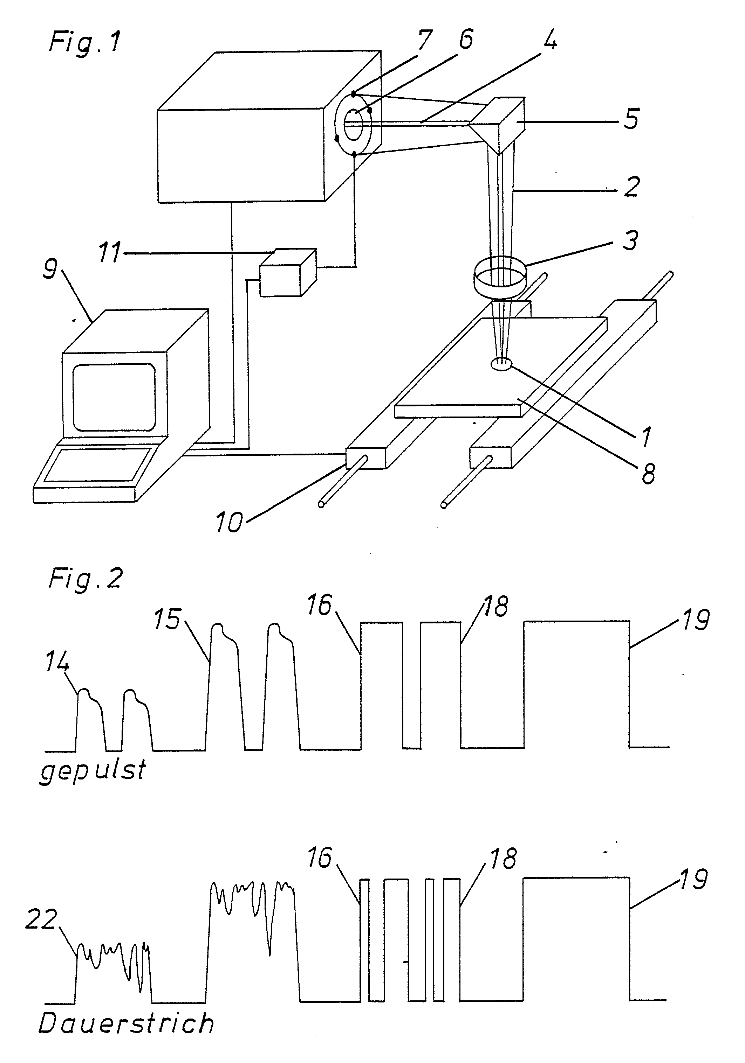

Die Fig. 1 zeigt, daß diese elektromagnetische Strahlung (2) zum Teil durch die Arbeitsoptik (3) strahlt, von dieser gebündelt wird und sich nach der Arbeitsoptik (3) nahezu parallel zum optischen Weg des Laserstrahls (4) ausbreitet.

Diese Strahlung wird an dem Spiegel (5) reflektiert und danach von einem oder mehreren ringförmig um die Resonatoraustrittsöffnung (6) angeordneten Detektoren (7) aufgenommen.

Die Signale, die von den Detektoren (7) aufgenommen werden, unterscheiden sich nach der Betriebsart (gepulst oder Dauerstrich) des Lasers. Dieses ist in Fig. 2 dargestellt. Beim gepulst betriebenen Laser werden periodisch auftretende Signale (14) gemessen, die annähernd die gleiche Amplitude aufweisen.

Die einzelnen Signale (22), die bei der Bearbeitung mit einem im Dauerstrich betriebenen Laser gemessen werden, unterscheiden sich in der Amplitude und der Frequenz. Die von den Detektoren (7) gemessenen Signale werden der in Fig. 3 dargestellten Schaltung (11) zugeführt.

Diese Schaltung (11) kann ohne Änderung für die Aufnahme der verschiedenen Signale beim gepulst und im Dauerstrich betriebenen Laser verwendet werden.

Das von den Detektoren (7) gemessene Signal (14) wird einem selektiven Wechselspannungsverstärker (12) zugeführt. Dieses hochverstärkte Meßsignal (15) wird durch einen Schnitt-Trigger (13) in Rechtecksignale (16) umgeformt und an ein Monoflop (17) weitergeleitet. Die Zeit nachdem das Monoflop (17) seinen Ausgangswert (19), nach Eingang einer negativen Flanke (18) des Rechtecksignals (16), von 1 auf 0 ändert, kann am Monoflop

(17) durch ein RC-Glied eingestellt werden.

Diese Zeitspanne wird so gewählt, daß die beim Durchstechvorgang des Laserstrahls (4) durch das Werkstück (8) auftretenden Sprünge des Rechtecksignals (16) nicht als negative Flanke (18) erkannt werden.

In Fig. 5 wird gezeigt, daß nach Durchdringen des Laserstrahls (4) durch das Werkstück (8) flüssiges Werkstückmaterial (21) nur um die Austrittsöffnung des Laserstrahls (23) vorhanden ist, so daß die vom flüssigen Werkstückmaterial (21) ausgehende elektromagnetische Strahlung (2) nur noch zu einem geringen Bruchteil durch die Arbeitsoptik (3) strahlt.

Der Pegel des nach dem Durchstechen von den Detektoren gemessenen Signals (14 oder 22) ist annähernd Null, so daß der Wert des Ausgangssignals (19) vom Monoflop (17) nach Ablauf der am RC-Glied eingestellten Verweildauer auf den Wert 0 fällt.

Der Sprung des Ausgangssignals des Monoflops (17) von 1 auf 0 wird vom angeschlossenen Prozeßrechner (9) als Befehl zum Beginn der Vorschubbewegung (10) gewertet.

Die Erfindung ist nach der Ausführung nach Anspruch 2 beschrieben. Sie läßt sich in einfacher Art und Weise auf die in den Ansprüchen 3 - 5 beschriebenen Ausführungen abhandeln, ohne den Rahmen der Erfindung zu überschreiten.

## Ansprüche

1. Verfahren zur Ermittlung des Durchstechzeitpunktes bei der Material bearbeitung mit einem Laserstrahl, dadurch gekennzeichnet, daß die von der Bearbeitungsstelle (1) ausgehende elektromagnetische Strahlung (2) von einem oder mehreren Detektoren (7) aufgenommen wird und die Änderung der Strahlungsintensität beim Durchdringen des Laserstrahls (4) durch das Werkstück (8) als Signal für die Werkzeugmaschine zum Beginn der Vorschubbewegung (10) verwendet wird.

2. Vorrichtung nach Anspruch 1, dadurch gekennzeichnet, daß von einem oder mehreren Detektoren (7) die über den optischen Weg des Laserstrahls (4) vom Werkstück emittierte elektromagnetische Strahlung (2) gemessen wird.

3. Vorrichtung nach Anspruch 1. dadurch gekennzeichnet, daß von einem oder mehreren Detektoren (7) die unterhalb des Werkstücks (8) emittierte elektromagnetische Strahlung gemessen wird.

4. Vorrichtung nach Anspruch 1, dadurch gekennzeichnet, daß von einem oder mehreren Detektoren (7) die oberhalb des Werkstücks (8) emittierte elektromagnetische Strahlung außerhalb des optischen Weges des Laserstrahls (4) gemessen wird.

5. Vorrichtung nach Anspruch 1, dadurch gekennzeichnet, daß ein oder mehrere Detektoren (7) unterhalb des Werkstückes (8) angeordnet sind und dort die durch das Einstechloch austretende Laserstrahlung (24) messen, die beim Durchdringen des Laserstrahls (4) durch das Werkstück (8) austritt.

Geänderte Patentansprüche gemäss Regel 86(2) EPU.

1. Verfahren zur Überwachung und Steuerung des Einstechvorganges bei der Materialbearbeitung mit einem Laserstrahl, dadurch gekennzeichnet, daß die von der Bearbeitungsstelle (1) ausgehende, elektromagnetische Strahlung (2) von anderer Frequenz als der der Laserstrahlung von einem oder mehreren Detektoren (7) in Strahlnähe, aber außerhalb des Laserstrahls, zwischen Laser und dem zu bearbeitenden Werkstück aufgenommen wird. Die vom Werkstück ausgehende Strahlungsintensität bzw. deren Änderung wird beim Bearbeiten des Werkstücks (8) durch den Laserstrahl (4) als Signal für die Werkzeugmaschine zur Prozeßsteuerung, z.B. zur Einstellung der Pulsfrequenz, der Laserintensität und zum Start der Vorschubbewegung (10), verwendet.

2. Vorrichtung nach Anspruch 1, dadurch gekennzeichnet, daß von einem oder mehreren Detektoren (7) die vom Werkstück (8) auf anderen Frequenzen als der Laserfrequenz emittierte elektromagnetische Strahlung (2) gemessen wird.

3. Vorrichtung nach Anspruch 1, dadurch gekennzeichnet, daß die Optik zur Führung und Fokussierung des Laserstrahls (3,5) auch in Gegenrichtung zur Führung von elektromagnetischer Strahlung anderer Frequenzen als der des Laserstrahls verwendet wird.

4. Vorrichtung nach Anspruch 1, dadurch gekennzeichnet, daß die Optik zur Führung und Fokussierung des Laserstrahls (3,5) in Gegenrichtung zur Sammlung und Intensitätserhöhung von elektromagnetischer Strahlung anderer Frequenzen als der des Laserstrahls verwendet wird.

5. Vorrichtung nach Anspruch 1, dadurch gekennzeichnet, daß von einem oder mehrere Detektoren (7) die vom Werkstück (8) emittierte elektromagnetische Strahlung außerhalb des optischen Weges des Laserstrahls (4) gemessen wird.

6. Vorrichtung nach Anspruch 1. dadurch gekennzeichnet, daß von einem oder mehreren Detektoren (7) die vom Werkstück (8) emittierte elektromagnetische Strahlung zwischen Werkstück (8) und Resonatoraustrittsöffnung (6) gemessen wird.

Fig.1

Fig.2

gepulst

Dauerstrich

Fig.3

Fig.4

Fig.5

| | Europäisches Patentamt | **EUROPÄISCHER RECHERCHENBERICHT** | Nummer der Anmeldung |
|---|---|---|---|

EP 88 10 8642

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | PATENT ABSTRACTS OF JAPAN vol. 10, no. 47 (M-456) 2104 25 Februar 1986, & JP-A-60 199588 (MITSUBISHI DENKI K.K.) * siehe das ganze Dokument * --- | 1-3,5 | B23K26/00 B23K26/04 |
| X | PATENT ABSTRACTS OF JAPAN vol. 10, no. 122 (M-476) 2179 07 Mai 1986, & JP-A-60 250892 (TOSHIBA K.K.) * siehe das ganze Dokument * --- | 1-3, 5 | |
| A | US-A-4504727 (R. L. MELCHER ET AL.) * das ganze Dokument * --- | 1-5 | |
| A | DE-A-3245846 (MITSUBISHI DENKI K.K.) * Seite 11, Zeile 17 - Zeile 26; Figuren 1, 3, 6 * ----- | 1-5 | RECHERCHIERTE SACHGEBIETE (Int. Cl.4 ) B23K26/00 |

Der vorliegende Recherchenbericht wurde für alle Patentansprüche erstellt

| Recherchenort | Abschlußdatum der Recherche | Prüfer |
|---|---|---|
| DEN HAAG | 31 JANUAR 1989 | ARAN D.D. |